# EUROPÄISCHE PATENTANMELDUNG

(11) **EP 1 330 001 A1**
(43) Veröffentlichungstag der Anmeldung: **23.07.2003**
(21) Anmeldenummer: 02015183.3
(22) Anmeldetag: 08.07.2002
(51) Int. Cl.: H02G 3/04

(54) **Kabelführungsaggregat**

(30) Priorität: 19.01.2002 DE 20200795 U
(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Honke, Manfred, Dr.-Ing.

(57) **Zusammenfassung**

Gegenstand der vorliegenden Erfindung ist ein Kabelführungsaggregat mit einer Mehrzahl von Kabelführungsrohren (1 bis 7). Das Kabelführungsaggregat eignet sich besonders zum Einführen in einen Kabelkanal (8). Die Kabelführungsrohre (1 bis 7) lassen sich unter Zwischenschaltung von Verbindungsstegen (9, 10) vorgegebener Stegbreite (S₁, S₂) zu einer Rohrmatte (11) vereinigen und zu einem Rohrbündel (12) zusammenlegen. Dabei sind als Kabelführungsrohre (1 bis 7) zumindest ein Zentralrohr (7) und mehrere beidseits daran angeschlossene Trabantenrohre (1 bis 6) vorgesehen. Erfindungsgemäß beträgt die Stegbreite (S₁) der Verbindungsstege (9) zwischen dem Zentralrohr (7) und den benachbarten Trabantenrohren (3, 4) jeweils ein Mehrfaches der Stegbreite (S₂) der Verbindungsstege (10) zwischen den Trabantenrohren (1 bis 6).

## Beschreibung

Die Erfindung betrifft ein Kabelführüngsaggregat mit einer Mehrzahl von Kabelführungsrohren, insbesondere zum Einführen in einen Kabelkanal, die unter Zwischenschaltung von Verbindungsstegen vorgegebener Stegbreite zu einer Rohrmatte vereinigt und zu einem Rohrbündel zusammenlegbar sind, wobei als Kabelführungsrohre zumindest ein Zentralrohr und mehrere Trabantenrohre vorgesehen sind. - Kabelkanal bezeichnet die z.B. im Telekommunikationsbereich üblichen Kabelschutzrohre für Telefonkabel, Lichtwellenleiterkabel bzw. Glasfaserkabel und andere moderne Kabelsysteme. Der Kabelkanal nimmt das Kabelführungsaggregat bzw. die Kabelführungsrohre auf. Die eigentlichen Kabel sind dabei nicht unmittelbar in dem Kabelkanal, sondern in die Kabelführungsrohre untergebracht, die dann wiederum innerhalb des Kabelkanals angeordnet sind.

Es ist ein Kabelführungsaggregat der eingangs beschriebenen Art bekannt, welches aus einer Mehrzahl von Kabelführungsrohren aus Kunststoff besteht, die unter Zwischenschaltung von flexiblen Abstandsstegen zu einer Matte vereinigt sind. Das Zentralrohr und die Trabantenrohre sind einschließlich der Abstandsstege als einheitliches Aggregat stranggepresst. Dabei weisen die Trabantenrohre einen gegenüber dem Zentralrohr reduzierten Durchmesser auf. Die Breite der Abstandsstege ist für das gesamte Kabelführungsaggregat identisch (vgl. DE 32 17 401 C2). Die insoweit bekannten Maßnahmen haben sich bewährt, sind jedoch hinsichtlich ihrer Funktionalität weiterentwicklungsfähig.

Der Erfindung liegt die Aufgabe zugrunde, ein Kabelführungsaggregat der eingangs beschriebenen Ausführungsform zu schaffen, welches einfach und funktionsgerecht aufgebaut ist und sich auf einfache Weise zu einem kompakten Rohrbündel zusammenlegen lässt.

Zur Lösung dieser Aufgabe lehrt die Erfindung, dass die Stegbreite der Verbindungsstege zwischen dem Zentralrohr und den benachbarten Trabantenrohren jeweils ein Mehrfaches der Stegbreite der Verbindungsstege zwischen Trabantenrohren beträgt. Es versteht sich, dass die Verbindungsstege als hinreichend flexible bzw. biegsame Stege ausgebildet sind, welche ein dichtes Zusammenlegen der Rohre zu einem Rohrbündel ermöglichen. Mit einer mehrfachen Stegbreite ist hier zumindest die doppelte Stegbreite gemeint, wobei die Dimensionen nicht auf ganzzahlige Vielfache beschränkt sind. Vielmehr kommt es wesentlich darauf an, dass die Verbindungsstege zwischen dem Zentralrohr und den benachbarten Trabantenrohren deutlich breiter sind als die Verbindungsstege zwischen jeweils zwei Trabantenrohren. Zweckmäßigerweise beträgt die Stegbreite der Verbindungsstege zwischen dem Zentralrohr und einem Trabantenrohr das Dreifache bis Zehnfache, vorzugsweise das Fünffache bis Siebenfache der Stegbreite der Verbindungsstege zwischen jeweils zwei Trabantenrohren. Nach einer besonders bevorzugten Ausführungsform ist ein Verhältnis der genannten Stegbreiten von sechs vorgesehen. Das Zentralrohr und die Trabantenrohre weisen vorzugsweise im Wesentlichen den gleichen Außendurchmesser auf. Im Übrigen ist die Stegbreite der Verbindungsstege zwischen jeweils zwei Trabantenrohren vorzugsweise im Wesentlichen identisch. Außerdem ist im Rahmen der Erfindung vorgesehen, dass die Anschlusspunkte der Verbindungsstege an die Trabantenrohre und/oder an das Zentralrohr im Wesentlichen diametral einander gegenüberliegendend angeordnet sind. Das bedeutet, dass die Verbindungsstege der aus den Kabelführungsrohren bestehenden ausgebreiteten Rohrmatte im Wesentlichen in einer Ebene liegen.

Dabei geht die Erfindung von der Erkenntnis aus, dass sich eine Rohrmatte aus Kabelführungsrohren in besonders einfacher und kompakter Weise zu einem Rohrbündel zusammenlegen lässt, wenn die Verbindungsstege zwischen den Trabantenrohren verhältnismäßig schmal und die Verbindungsstege zwischen dem Zentralrohr und einem Trabantenrohr demgegenüber verhältnismäßig breit ausgebildet sind. Eine derartige Anordnung ermöglicht ein besonders kompaktes Zusammenlegen der Kabelführungsrohre zu einem Kabelführungsaggregat mit einem vergleichsweise geringen Außenumfang bzw. einer geringen Oberfläche, so dass die Reibungswiderstände im Zuge des Einziehens bzw. Einführens des Kabelführungsaggregats beispielsweise in einen Kabelkanal minimiert werden. Damit lassen sich die erfindungsgemäßen Rohrbündel auch über sehr lange Distanzen ohne Störungen in einen Kabelkanal einbringen, der auf seiner Kanalinnenwand z.B. mit zueinander parallel verlaufenden oder richtungsändernden spiralförmigen o. dgl. Gleitrippen ausgestattet sein kann. Außerdem lässt sich das erfindungsgemäße Kabelführungsaggregat bzw. die aus den Kabelführungsrohren und Verbindungsstegen bestehende Rohrmatte z.B. zu Transport- oder Lagerzwecken besonders einfach zusammenrollen. Dieses gilt insbesondere, wenn sämtliche Rohre den gleichen Durchmesser aufweisen.

Die Kabelführungsrohre und die Verbindungsstege sind vorzugsweise aus Kunststoff gefertigt, wobei die Kabelführungsrohre einerseits und die Verbindungsstege andererseits sowohl aus ein und dem selben Material als auch aus verschiedenen Kunststoffen gefertigt sein können. Es besteht die Möglichkeit, die Verbindungsstege als besonders flexible und gegebenenfalls dehnbare oder elastische Verbindungsstege auszubilden. Ferner schlägt die Erfindung vor, dass das Zentralrohr, die Trabantenrohre und die Verbindungsstege einstückig ausgebildet sind, d.h. beispielsweise im Wege der Extrusion oder Coextrusion gefertigt sind. Es besteht aber auch die Möglichkeit, die Rohre und die Verbindungsstege mehrstückig auszubilden, d.h. getrennt zu fertigen und anschließend miteinander zu verbinden.

Nach einem weiteren Vorschlag der Erfindung sind ein einziges Zentralrohr und beidseitig des Zentralrohres jeweils drei Trabantenrohre vorgesehen. Dabei kann die Stegbreite der Verbindungsstege zwischen den Trabantenrohren in etwa 10 % bis 30 %, vorzugsweise 20 % des Außendurchmessers der Trabantenrohre oder des Zentralrohres betragen. Die Stegbreite der Verbindungsstege zwischen Zentralrohr und einem Trabantenrohr entspricht nach einem weiteren Vorschlag der Erfindung in etwa dem Außendurchmesser des Zentralrohres bzw. des Trabantenrohres. Vorzugsweise entspricht die Stegbreite des Verbindungssteges zwischen dem Zentralrohr und einem Trabantenrohr in etwa der Summe des Außendurchmessers des Zentralrohres oder Trabantenrohres und der Stegbreite eines der Verbindungsstege zwischen den Trabantenrohren.

In zweckmäßiger Weiterbildung der Erfindung ist vorgesehen, dass der Außendurchmesser des Zentralrohres in etwa 10 mm beträgt, dass die Stegbreite der Verbindungsstege zwischen den Trabantenrohren in etwa 2 mm beträgt und dass die Stegbreite der Verbindungsstege zwischen dem Zentralrohr und den Trabantenrohren in etwa 12 mm beträgt. Diese Dimensionierung schafft ein Kabelführungsaggregat, welches sich in besonders einfacher und kompakter Weise zu einem Klein-Rohrbündel zusammenlegen lässt.

Im Folgenden wird die Erfindung anhand einer lediglich ein Ausführungsbeispiel darstellenden Zeichnung näher erläutert. Es zeigen
- Fig. 1: einen Querschnitt durch ein erfindungsgemäßes Kabelführungsaggregat mit einer Mehrzahl von Kabelführungsrohren,
- Fig. 2: den Gegenstand nach Fig. 1 im Zuge des Zusammenlegens zu einem Rohrbündel und
- Fig. 3: den Gegenstand nach Fig. 1 in einer zu einem Rohrbündel zusammengelegten Form innerhalb eines Kabelkanals.

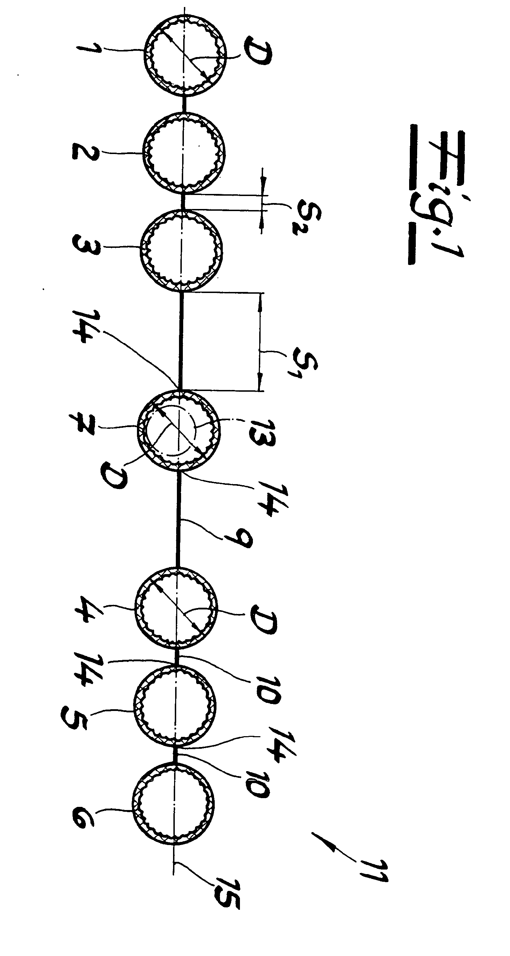

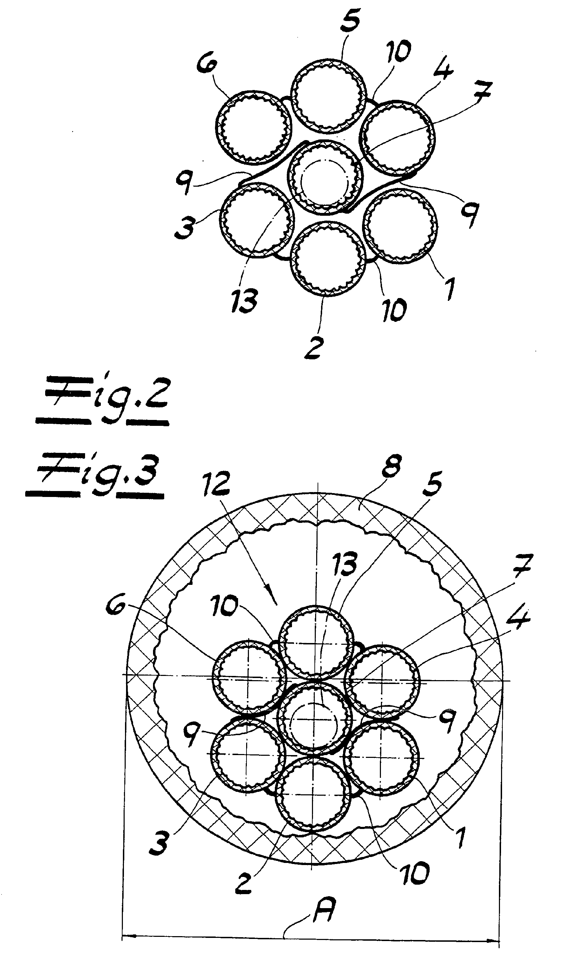

In den Figuren ist ein Kabelführungsaggregat mit einer Mehrzahl von Kabelführungsrohren 1 bis 7 zum Einführen in einen Kabelkanal 8 dargestellt. Die Kabelführungsrohre 1 bis 7 sind unter Zwischenschaltung von Verbindungsstegen 9, 10 vorgegebener Stegbreite S₁, S₂ zu einer Rohrmatte 11 vereinigt (vgl. Fig. 1) und zu einem Rohrbündel 12 zusammenlegbar (vgl. Fig. 2 und 3). Das zusammengelegte Rohrbündel 12 lässt sich dann in einen Kabelkanal 8 einführen (vgl. Fig. 3). Als Kabelführungsrohre 1 bis 7 sind einerseits ein Zentralrohr 7 und andererseits beidseits daran angeschlossene Trabantenrohre 1 bis 6 vorgesehen. Dabei wird die Rohrmatte 11 dann derart zu einem Rohrbündel 12 zusammengelegt, dass die Trabantenrohre 1 bis 6 das Zentralrohr 7 gleichsam umschließen.

In den Figuren ist angedeutet, dass innerhalb der Kabelführungsrohre 1 bis 7, also innerhalb des Zentralrohres 7 bzw. der Trabantenrohre 1 bis 6, Kabel 13, z.B. Glasfaserkabel, geführt sein können. Dieses ist in den Figuren lediglich für das Zentralrohr 7 angedeutet. Im Übrigen weisen die im Querschnitt runden Kabelführungsrohre 1 bis 7 jeweils eine Rohrinnenwand mit zueinander parallel verlaufenden Gleitrippen auf, auf welchen die einzuziehenden Kabel 13 im Zuge des Einführens gleiten. Dagegen weist die Innenwand des Kabelkanals 8 richtungsändernde spiralförmige Gleitrippen auf, in welchen das zusammengelegte Rohrbündel 12 eingeführt wird. Dieses ist in den Figuren lediglich angedeutet. Das Einführen des Rohrbündels 12 in den Kabelkanal 8 kann beispielsweise durch Einziehen mit einem Kabeleinziehstrumpf mit Zugdraht oder durch einen mit Druckkraft vorangetriebenen Molch je nach Bedarf erfolgen. Es besteht aber auch die Möglichkeit, das Kabelbündel 12 mit Luft einzublasen, wobei das Rohr bzw. die Rohre durch den vorbeiströmenden laminaren Luftstrom getragen wird.

Darüber hinaus besteht grundsätzlich auch die Möglichkeit des Einspülens mit Wasser.

Erfindungsgemäß beträgt die Stegbreite S₁ der beiden Verbindungsstege 9 zwischen dem Zentralrohr 7 und den jeweils benachbarten Trabantenrohren 3, 4 jeweils ein Mehrfaches der Stegbreite S₂ der Verbindungsstege 10 zwischen den Trabantenrohren 1 bis 6. Dieses ist insbesondere in Fig. 1 erkennbar, welche das Kabelführungsaggregat als Rohrmatte 11 zeigt. Im Ausführungsbeispiel beträgt die Stegbreite S₁ der Verbindungsstege 9 zwischen dem Zentralrohr 7 und den beiden benachbarten Trabantenrohren 3, 4 in etwa das Sechsfache der Stegbreite S₂ der Verbindungsstege 10 zwischen jeweils zwei Trabantenrohren 1 bis 6. Ferner ist den Figuren zu entnehmen, dass das Zentralrohr 7 und sämtliche Trabantenrohre 1 bis 6 im Wesentlichen den gleichen Außendurchmesser D aufweisen. Die Stegbreite S₂ der Verbindungsstege 10 zwischen jeweils zwei Trabantenrohren 1 bis 6 ist ebenfalls identisch. Außerdem zeigen die Figuren, dass die Anschlusspunkte 14 der Verbindungsstege 9, 10 sowohl an die Trabantenrohre 1 bis 6 als auch an das Zentralrohr 7 im Wesentlichen diametral einander gegenüberliegend angeordnet sind, so dass die Verbindungsstege 9, 10 bei der in Fig. 1 dargestellten Rohrmatte 11 alle in einer horizontalen Ebene 15 verlaufen, welche die Kabelführungsrohre 1 bis 7 im Querschnitt mittig schneidet.

Insbesondere aus einer vergleichenden Betrachtung der Fig. 1, 2 und 3 wird deutlich, dass sich die Trabantenrohre 1 bis 6 im Zuge des Zusammenlegens der Rohrmatte 11 zu einem Rohrbündel 12 eng an das Zentralrohr 7 anlegen. Dabei kommen die auf der einen Seite der Rohrmatte 11 angeordneten Trabantenrohre 1 bis 3 bzw. 4 bis 6 zumindest zum Teil unter Zwischenschaltung des Verbindungssteges 9 der anderen Seite der Rohrmatte 11, also zwischen Zentralrohr 7 und Trabantenrohr 4 bzw. zwischen Zentralrohr 7 und Trabantenrohr 3, mit dem Zentralrohr in Kontakt.

Sowohl das Zentralrohr 7 und die Trabantenrohre 1 bis 6 als auch die Verbindungsstege 9, 10 sind aus Kunststoff gefertigt. Dabei sind das Zentralrohr 7, die Trabantenrohre 1 bis 6 und die Verbindungsstege 9, 10 einstückig ausgebildet.

Die Dimensionen der Stegbreiten S₂ im Bereich der Trabantenrohre 1 bis 6 sind so getroffen, dass die Stegbreite S₂ der Verbindungsstege 10 zwischen den Trabantenrohren 1 bis 6 in etwa 20% des Außendurchmessers D der Trabantenrohre 1 bis 6 beträgt. Außerdem entspricht die Stegbreite S₁ der Verbindungsstege 9 zwischen dem Zentralrohr 7 und den benachbarten Trabantenrohren 3, 4 der Summe aus einerseits Außendurchmesser D des Zentralrohres 7 und andererseits der Stegbreite S₂ eines der Verbindungsstege 10 zwischen den Trabantenrohren 1 bis 6.

Damit ergeben sich bei dem im Ausführungsbeispiel dargestellten Klein-Rohrbündel folgende Dimensionen bzw. Maße. Der Außendurchmesser A des Kabelkanals 8 beträgt 50 mm. Der Außendurchmesser D sowohl der Trabantenrohre 1 bis 6 als auch des Zentralrohrs 7 beträgt 10 mm. Innerhalb der Kabelführungsrohre 1 bis 7 sind beispielsweise Glasfaserkabel 13 mit einem Durchmesser von 6 mm angeordnet. Die Stegbreite S₂ der Verbindungsstege 10 zwischen den Trabantenrohren 1 bis 6 beträgt 2 mm, während die Stegbreite S₁ der Verbindungsstege 9 zwischen dem Zentralrohr 7 und den beidseitigen Trabantenrohren 3, 4 ca. 12 mm beträgt. Damit ergibt sich insgesamt eine Rohrmatte 11 mit einer Mattenlänge von 102 mm, welche aus insgesamt sieben Kabelführungsrohren 1 bis 7 besteht und zu einem Kabelbündel 12 mit einem Außendurchmesser von in etwa 30 mm zusammenlegbar ist.

## Patentansprüche

1. Kabelführungsaggregat mit einer Mehrzahl von Kabelführungsrohren (1 bis 7), insbesondere zum Einführen in einen Kabelkanal (8), die unter Zwischenschaltung von Verbindungsstegen (9, 10) vorgegebener Stegbreite (S₁, S₂) zu einer Rohrmatte (11) vereinigt und zu einem Rohrbündel (12) zusammenlegbar sind, wobei als Kabelführungsrohre (1 bis 7) zumindest ein Zentralrohr (7) und mehrere beidseits daran angeschlossene Trabantenrohre (1 bis 6) vorgesehen sind, **dadurch gekennzeichnet, dass** die Stegbreite (S₁) der Verbindungsstege (9) zwischen dem Zentralrohr (7) und den benachbarten Trabantenrohren (3, 4) jeweils ein Mehrfaches der Stegbreite (S₂) der Verbindungsstege (10) zwischen den Trabantenrohren (1 bis 6) beträgt.

2. Kabelführungsaggregat nach Anspruch 1, **dadurch gekennzeichnet, dass** die Stegbreite (S₁) der Verbindungsstege (9) zwischen dem Zentralrohr (7) und den Trabantenrohren (3, 4) das bis zu Zehnfache, vorzugsweise das Fünffache bis Siebenfache der Stegbreite (S₂) der Verbindungsstege (10) zwischen jeweils zwei Trabantenrohren (1 bis 6) beträgt.

3. Kabelführungsaggregat nach Anspruch 1 oder 2, **dadurch gekennzeichnet, dass** das Zentralrohr (7) und die Trabantenrohre (1 bis 6) im Wesentlichen den gleichen Außendurchmesser (D) aufweisen.

4. Kabelführungsaggregat nach einem der Ansprüche 1 bis 3, **dadurch gekennzeichnet, dass** die Stegbreite (S₂) der Verbindungsstege (10) zwischen jeweils zwei Trabantenrohren (1 bis 6) im Wesentlichen identisch ist.

5. Kabelführungsaggregat nach einem der Ansprüche 1 bis 4, **dadurch gekennzeichnet, dass** die Anschlusspunkte (14) der Verbindungsstege (9, 10) an die Trabantenrohre (1 bis 6) und/oder an das Zentralrohr (7) im Wesentlichen diametral einander gegenüberliegend angeordnet sind.

6. Kabelführungsaggregat nach einem der Ansprüche 1 bis 5, **dadurch gekennzeichnet, dass** das Zentralrohr (7), die Trabantenrohre (1 bis 6) und/oder die Verbindungsstege (9, 10) aus Kunststoff gefertigt sind.

7. Kabelführungsaggregat nach Anspruch 6, **dadurch gekennzeichnet, dass** das Zentralrohr (7), die Trabantenrohre (1 bis 6) und die Verbindungsstege (9, 10) einstückig ausgebildet sind.

8. Kabelführungsaggregat nach einem der Ansprüche 1 bis 7, **dadurch gekennzeichnet, dass** ein Zentralrohr (7) und beidseitig davon jeweils drei Trabantenrohren (1 bis 6) vorgesehen sind.

9. Kabelführungsaggregat nach einem der Ansprüche 1 bis 8, **dadurch gekennzeichnet, dass** die Stegbreite (S₂) der Verbindungsstege (10) zwischen den Trabantenrohren (1 bis 6) in etwa 10 % bis 30 %, vorzugsweise in etwa 20 % des Außendurchmessers (D) der Trabantenrohre (1 bis 6) beträgt.

10. Kabelführungsaggregat nach einem der Ansprüche 1 bis 9, **dadurch gekennzeichnet, dass** die Stegbreite (S₁) der Verbindungsstege (9) zwischen Zentralrohr (7) und den beidseitigen Trabantenrohren (3, 4) jeweils in etwa dem Außendurchmesser (D) des Zentralrohres (7) oder des Trabantenrohres (1 bis 6) entspricht.

11. Kabelführungsaggregat nach einem der Ansprüche 1 bis 9, **dadurch gekennzeichnet, dass** die Stegbreite (S₁) der Verbindungsstege (9) zwischen dem Zentralrohr (7) und dem beidseitigen Trabantenrohr (3, 4) jeweils in etwa der Summe aus einerseits Außendurchmesser (D) des Zentralrohres (7) bzw. Trabantenrohres und andererseits der Stegbreite (S₂) der Verbindungsstege (10) zwischen den Trabantenrohren (1 bis 6) entspricht.

12. Kabelführungsaggregat nach einem der Ansprüche 1 bis 11, **dadurch gekennzeichnet, dass** der Außendurchmesser (D) des Zentralrohres (7) und der Trabantenrohre (1 bis 6) in etwa 10 mm beträgt, dass die Stegbreite (S₂) der Verbindungsstege (10) zwischen den Trabantenrohren (1 bis 6) in etwa 2 mm beträgt und dass die Stegbreite (S₁) der Verbindungsstege (9) zwischen dem Zentralrohr (7) und den benachbarten Trabantenrohren (3, 4) in etwa 12 mm beträgt.
